# EUROPEAN PATENT SPECIFICATION

(11) **EP 3 348 433 B1**
(45) Date of publication and mention of the grant of the patent: **08.02.2023**
(21) Application number: 17210901.9
(22) Date of filing: 28.12.2017
(51) Int. Cl.: B60K 37/06

(54) **INFORMATION DISPLAY DEVICE AND VEHICLE APPARATUS**
INFORMATIONSANZEIGEVORRICHTUNG UND FAHRZEUGVORRICHTUNG
DISPOSITIF D'AFFICHAGE D'INFORMATIONS ET APPAREIL DE VÉHICULE

(30) Priority: 28.12.2016 JP 2016255969
(43) Date of publication of application: 18.07.2018
(73) Proprietor: Ricoh Company, Ltd., Tokyo 143-8555 (JP)
(72) Inventor: YAMAGUCHI, Hiroshi, Tokyo, 143-8555 (JP); KUSANAGI, Masato, Tokyo, 143-8555 (JP); SAISHO, Kenichiroh, Tokyo, 143-8555 (JP); SUZUKI, Yuuki, Tokyo, 143-8555 (JP); KATAGIRI, Keita, Tokyo, 143-8555 (JP)
(74) Representative: SSM Sandmair

(56) References cited:
- EP-A1- 3 031 655
- US-A1- 2016 327 402
- US-A9- 2016 054 563

## Description

### BACKGROUND

### Technical Field

Embodiments of the present invention relate to an information display device and a vehicle apparatus.

### Background Art

Conventionally, devices that display information including the information display related to the scheduled route along which a vehicle travels as a virtual image in a display area are known in the art (see, for example, JP-2005-241516-A).

However, in the device disclosed in JP-2005-241516-A, there is room for improvement in reducing the inconvenience or annoyance that could be caused by information display with simple controlling processes, and the driver can still recognize the items of the information display

US 2016/327402 A1 discloses that a peripheral information obtaining unit, a road information obtaining unit, and a communication unit which are included in a driving environment obtaining unit obtain information indicating a current state of a drive environment and that a driver information obtaining unit and a vehicle information obtaining unit which are included in a driving state obtaining unit obtain information indicating a driving state of a current driver (cf. Abstract). This document further discloses that a display controller controls at least one of a display position and a display timing of a guidance sign to be displayed on a display unit, based on at least one of the pieces of information which are output from the driving environment obtaining unit, the driving state obtaining unit, and a route guiding unit.

### SUMMARY

Embodiments of the present invention described herein provide an information display device (100) and a vehicle according to claims 1 and 10.

According to one aspect of the present invention, the inconvenience or annoyance that could be caused by information display can be reduced with simple controlling processes, and the driver can still recognize the items of the information display.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.
FIG. 1 is a diagram illustrating an outline of the configuration of a heads-up display (HUD) according to an embodiment of the present disclosure.
FIG. 2 is a block diagram of a hardware configuration of a control system of a HUD according to an embodiment of the present disclosure.
FIG. 3 is a functional block diagram of a HUD according to an embodiment of the present disclosure.
FIG. 4 is a diagram illustrating a light source of a HUD according to an embodiment of the present disclosure.
FIG. 5 is a diagram illustrating a light deflector of a HUD according to an embodiment of the present disclosure.
FIG. 6 is a diagram illustrating the relation between a mirror of a light deflector and the scanning range, according to an embodiment of the present disclosure.
FIG. 7 is a diagram illustrating the trajectory of a scanning line when two-dimensional scanning is performed, according to an embodiment of the present disclosure.
FIG. 8A and FIG. 8B are diagrams illustrating a difference in operation due to differences in sizes of the diameter of incident light flux and the lens diameter in a microlens array, according to an embodiment of the present disclosure.
FIG. 9 is a block diagram of a configuration of an image data generator, according to an embodiment of the present disclosure.
FIG. 10 is a diagram illustrating a state where a display area overlaps with the road surface ahead of the user's vehicle, according to an embodiment of the present disclosure.
FIG. 11 is a diagram illustrating information display that is displayed in a display area, indicating the direction of the next corner, the place name, and the remaining distance to the next corner, according to an embodiment of the present disclosure.
FIG. 12A to FIG. 12D are diagrams each illustrating a different case where the visual excitability of information display is changed, according to an embodiment of the present disclosure.
FIG. 13 is a diagram illustrating a case where the visual excitability of information display is altered between the timing at which the remaining distance to the next corner is updated and before and after the update, according to an embodiment of the present disclosure.
FIG. 14A to FIG. 14D are diagrams illustrating a case where the visual excitability of information display is changed when an augmented reality (AR) display, which moves as the vehicle travels forward, overlaps with information display, according to an embodiment of the present disclosure.
FIG. 15A and FIG. 15B are a flowchart of the displaying processes performed by a heads-up display (HUD), according to an embodiment of the present disclosure.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

### <General Outline>

In the following description, a heads-up display (HUD) 100 according to an embodiment of the present disclosure is described with reference to the accompanying drawings.

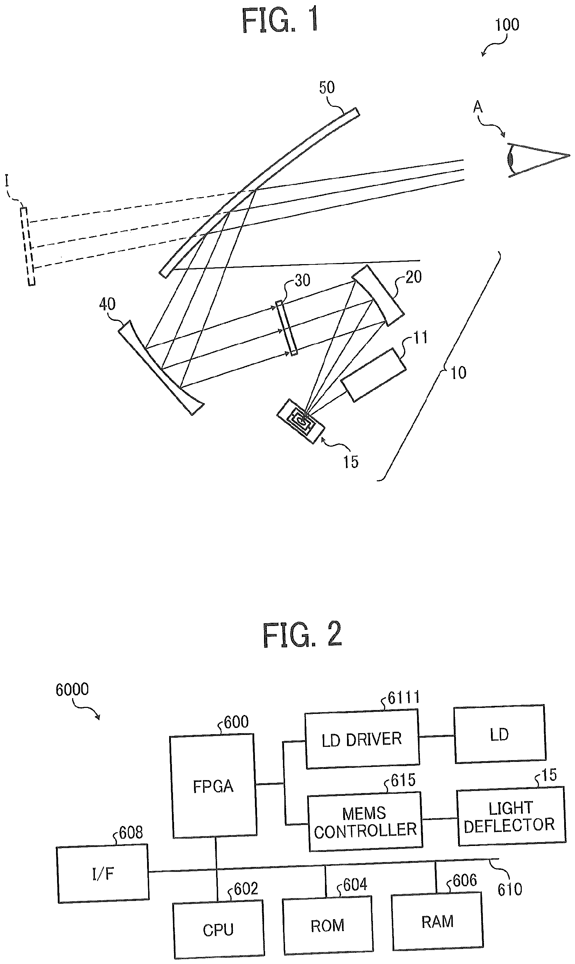

FIG. 1 is a diagram illustrating a schematic configuration of the HUD 100 according to an embodiment of the present disclosure.

### <Schematic Configuration of HUD>

A method of projecting an image using a HUD is implemented by a panel system or a laser scanning system. In the panel system, an intermediate image is formed by an imaging device such as a liquid crystal panel, a digital micromirror device (DMD) panel (digital mirror device panel), or a vacuum fluorescent display (VFD). In the laser scanning system, an intermediate image is formed by scanning a laser beam emitted from a laser beam source, using a two-dimensional scanning device.

In the laser scanning system, in particular, emitting or non-emitting can be set n a pixel-by-pixel basis, unlike the panel system where an image is formed by partially blocking the full-screen light emission. Accordingly, in latter system (i.e., the laser scanning system), a high-contrast image can be formed in most cases.

In view of the above, the HUD 100 according to the present embodiment adopts the laser scanning system. As a matter of course, in some alternative embodiments, the above-described panel system may be adopted as the projection system.

For example, the HUD 100 is mounted in a vehicle, and makes navigation information visible through a front windshield 50 (see FIG. 1) of the vehicle. The navigation information includes, for example, the information about the speed of the vehicle, the course information, the distance to a destination, the name of the current place, the presence or position of an object ahead of the vehicle, a traffic sign indicating, for example, speed limit, and traffic congestion, and aids the driving of the vehicle. In such a configuration, the front windshield 50 also serves as a transmissive reflector that transmits a portion of the incident light and reflects at least some of the remaining incident light. In the following description, cases are described in which the HUD 100 is mounted in a vehicle having the front windshield 50.

As illustrated in FIG. 1, the HUD 100 includes an optical scanner 10, a screen 30, and a concave mirror 40, and the optical scanner 10 includes a light source 11, a light deflector 15, and a scanning mirror 20. The HUD 100 emits light (image light) for forming an image on the front windshield 50 to allow a viewer A (i.e., the driver (passenger) of the vehicle in the present embodiment) to visually recognize a virtual image I from the location of the eyepoint. In other words, the viewer A can visually recognize, through the front windshield 50, an image (intermediate image) as the virtual image I formed (drawn) on the screen 30 by the optical scanner 10.

For example, the HUD 100 is disposed under the dashboard of the vehicle, and the distance from the location of the eyepoint of the viewer A to the front windshield 50 ranges from several tens of centimeters (cm) to about 1 meter (m) at the longest.

In the present embodiment, the concave mirror 40 is designed using a commercially available optical design simulation software such that the concave mirror 40 obtains a predetermined level of light-gathering power to achieve a desired image-forming position of the virtual image I.

In the HUD 100, the light-gathering power of the concave mirror 40 is designed such that the virtual image I is displayed at a position away from the location of the eyepoint of the viewer A in the depth direction by, for example, at least 1 m and equal to or shorter than 30 m (preferably, equal to or shorter than 10 m).

Note also that the front windshield 50 is not flat but is slightly curved as known in the art. Accordingly, the image forming position of the virtual image I is determined by the concave mirror 40 and the curved surface of the front windshield 50.

The light source 11 combines three-color laser beams (red, green, and blue (RGB)) that are modulated according to the image data. The combined light where the three-color laser beams are combined is guided to the reflection plane of the light deflector 15. The light deflector 15 that serves as a deflector is a micro-electromechanical system (MEMS) scanner produced by semiconductor manufacturing processes or the like, and includes a single micromirror that is independently rotatable about two axes that are orthogonal to each other. The light source 11 and the light deflector 15 are described later in detail.

The light (i.e., the combined light) that corresponds to the image data output from the light source 11 is deflected by the light deflector 15 and is reflected at the scanning mirror 20, and the screen 30 is irradiated with the deflected and reflected light. Then, the screen 30 is optically scanned to form an intermediate image thereon. Accordingly, the light deflector 15 and the scanning mirror 20 constitute an optical scanning system. In such a configuration, it is desired that the concave mirror 40 be designed and disposed so that the concave mirror 40 corrects the optical deformation in which the horizontal line of the intermediate image is distorted to be convex in an upward or downward direction due to the effect of the front windshield 50.

The light that has passed through the screen 30 is reflected by the concave mirror 40 towards the front windshield 50. Some of the bundle of light rays that are incident upon the front windshield 50 passes through the front windshield 50, and at least some of the remaining light rays are reflected by the front window 50 towards the location of the eyepoint of the viewer A. As a result, the viewer A can visually recognize a virtual image I, which is a magnified intermediate image, through the front windshield 50. In other words, the viewer A can see the magnified virtual image I through the front window 50.

Alternatively, a combiner may be disposed as a transmissive reflector at a position closer to the location of the eyepoint of the viewer A than the front windshield 50 to be irradiated with the light reflected from the concave mirror 40. Also in such a configuration as above, a virtual image can be displayed in a similar manner to the configuration where only the front windshield 50 is provided.

### <Hardware Configuration of Control System of HUD>

FIG. 2 is a block diagram of a hardware configuration of the control system 6000 of the HUD 100, according to the present embodiment.

As illustrated in FIG. 2, the control system 6000 of the HUD 100 includes a field programmable gate array (FPGA) 600, a central processing unit (CPU) 602, a read-only memory (ROM) 604, a random access memory (RAM) 606, an interface (I/F) 608, a bus line 610, a laser diode (LD) driver 6111, and a micro-electromechanical systems (MEMS) controller 615.

The FPGA 600 controls the LD driver 6111 to drive laser diodes (LDs) according to the image data, and controls the MEMS controller 615 to operate the light deflector 15. The LDs will be described later in detail. The CPU 602 controls the multiple functions of the HUD 100. The ROM 604 stores an image processing program that is executed by the CPU 602 to control the multiple functions of the HUD 100. The RAM 606 is used as a work area in which the CPU 602 executes the program. The interface 608 is an interface used to communicate with an external controller such as a controller area network (CAN) of the vehicle.

### <Functional Blocks of HUD>

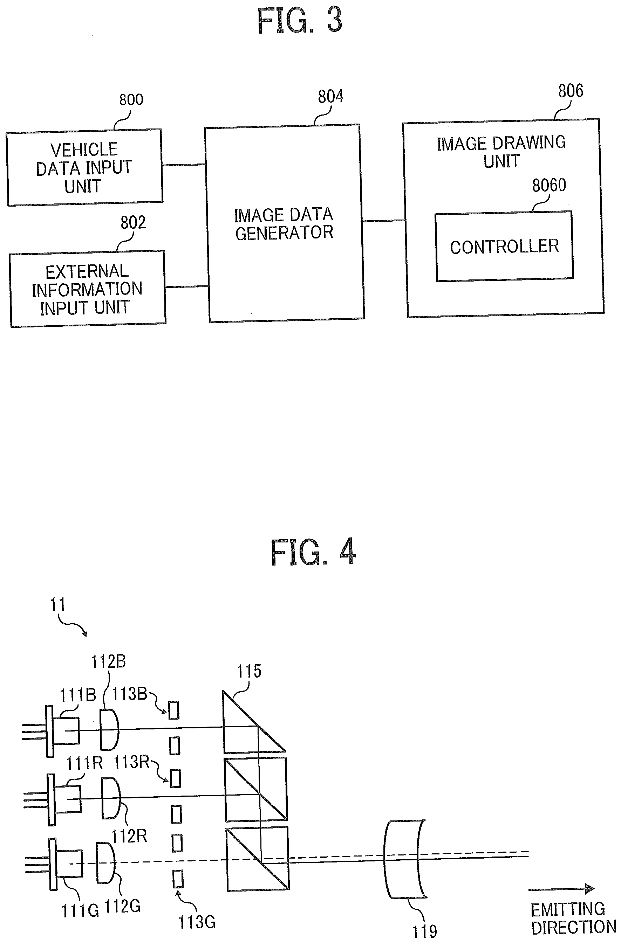

FIG. 3 is a block diagram illustrating the functions of the HUD 100, according to the present embodiment.

As illustrated in FIG. 3, the HUD 100 includes a vehicle data input unit 800, an external data input unit 802, an image data generator 804, and an image drawing unit 806. The vehicle data input unit 800 receives vehicle-related data such as the speed of the vehicle, the mileage, the position of a target object, and the outside brightness from the CAN or the like. The external data input unit 802 receives external data such as navigation information obtained from the on-vehicle car navigation system from the external network. The image data generator 804 generates image data of an image to be drawn according to the data input from, for example, the vehicle data input unit 800 and the external data input unit 802, and sends the generated image data to the image drawing unit 806. The image drawing unit 806 includes a control unit 8060 to draw an image according to the received image data. The image data generator 804 and the control unit 8060 are implemented by the FPGA 600. The image drawing unit 806 is implemented by several elements including the FPGA 600, the LD driver 6111, the MEMS controller 615, the optical scanner 10, the screen 30, and the concave mirror 40.

### <Configuration of Light Source>

FIG. 4 is diagram illustrating a configuration of the light source 11, according to the present embodiment.

As illustrated in FIG. 4, the light source 11 is provided with a plurality of light emitting elements 111R, 111B, and 111G each having a single or a plurality of light-emitting points. For example, each of the light emitting elements 111R, 111B, and 111G includes three light-emitting points in the present embodiment. Each of the light emitting elements 111R, 111G, and 111B is a laser diode (LD), and the light emitting elements 111R, 111G, and 111B emit light flux having different wavelengths λP, λG, and λB, respectively. For example, the wavelengths λR, λG, and λB are 640 nanometers (nm), 530 nm, and 445 nm, respectively. In the following description, the light emitting elements 111R, 111G, and 111B may be referred to simply as the LD 111R, the LD 111G, and the LD 111B, respectively. The bundles of light rays that are emitted from the LD 111R, the LD 111G, and the LD 11 1B with the wavelengths λR, λG, and λB, respectively, pass through the corresponding coupling lenses 112R, 112G, and 112B to be coupled to the subsequent optical system, and the coupled bundles of light rays are shaped by corresponding apertures 113R, 113G, and 113B. The shape of the apertures may be various kinds of shape such as a circle, an ellipse, a rectangle, and a square depending on, for example, the divergence angle of the bundles of light rays. Then, the bundles of light rays that are shaped by the corresponding apertures 113R, 113G, and 113B pass through a combiner 115 and are combined into one bundle of light rays that travels along one optical path. The combiner 115 is a plate-like or prismatic dichroic mirror, and reflects or transmits the bundles of light rays therethrough according to the wavelength of each of the bundles of light rays to combine the bundles of light rays into one bundle of light rays that travels along one optical path. The combined bundle of light rays is guided to the reflection plane of the light deflector 15 by a lens 119. The lens 119 is a meniscus lens where the concave surface faces the light deflector 15.

### <Configuration of Light Deflector>

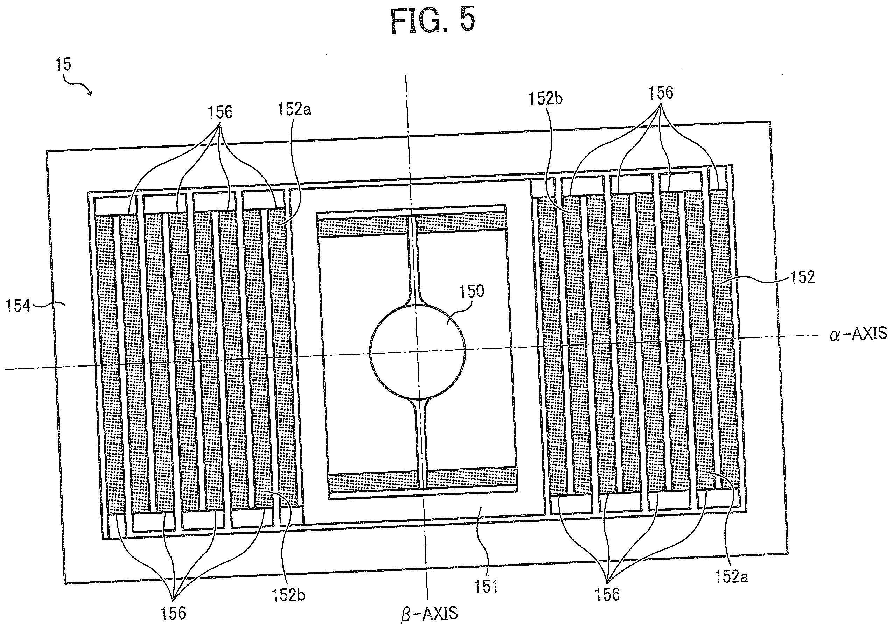

FIG. 5 is diagram illustrating a configuration of the light deflector 15, according to the present embodiment.

As illustrated in FIG. 5, the light deflector 15 is a two-axis MEMS scanner produced by a semiconductor manufacturing process, and is provided with a mirror 150 having a reflection plane, and a pair of serpentine units 152 including a plurality of beams that are arranged in α-axis direction. The neighboring two beams of the serpentine units 152 are referred to as a beam A (152a) and a beam B (152b), and are connected to each other through a turning portion so as to meander. The beam A (152a) and the beam B (152b) are supported by a frame 154. Each of the beams is provided with a plurality of piezoelectric members 156 (for example, lead zirconate titanate (PZT)). The piezoelectric members 156 of one of the two neighboring beams (152a, 152b) in the serpentine units 152 are supplied with voltage different from the voltage applied to the piezoelectric members 156 of the other one of the two neighboring beams (152a, 152b). By so doing, the two neighboring beams (152a, 152b) bend in different directions, and elastic energy is accumulated in the bent portions. As a result, the mirror 150 rotates about the α axis (in the vertical direction) with a wide angle. Due to such a configuration, optical scanning about the α axis in the vertical direction can be performed with low voltage. On the other hand, resonating optical scanning about the β axis in the horizontal direction is performed using, for example, a torsion bar that is connected to the mirror 150.

At a moment, only dot images that correspond to the laser beam diameter are projected from the HUD 100. However, the scanning is performed at such high speed that an image within one frame image can be recognized through human eyes to a sufficient degree because of persistence of vision. Due to such persistence of vision, the viewer can sense the image as if the image is projected onto a "display area."
In actuality, the image that is displayed on the screen 30 is reflected by the concave mirror 40 and the front windshield 50, and the image on the "display area" is sensed by the viewer as a virtual image. In such a mechanism, the light emission of the LDs may be stopped when no image is to be displayed. Due to this configuration, the luminosity at the portions of the "display area" other than the portions at which a virtual image is displayed can virtually be "0".

Accordingly, the position at which a virtual image is formed by the HUD 100 may be any position within the prescribed "display area" where the virtual image can be formed. The "display area" is determined by the specifications of the HUD 100 at the time of design.

As described above, a "laser scanning system" is adopted in the present embodiment. Accordingly, no illumination is necessary at portions other than the positions where images are to be displayed, and thus the LDs may be switched off or the amounts of light may be reduced.

By contrast, in the panel system where an intermediate image is expressed by an imaging device such as a liquid crystal panel or a DMD panel, the entire panel needs to be irradiated with light. For this reason, even if the image signal indicates non-display (black display), it is difficult to completely cease the illumination to zero due to the properties and characteristics of the liquid crystal panel or the DMD panel. As a result, there are some cases in which a black portion appears to be floating up in the panel system. In the laser scanning system, such black floating can be eliminated.

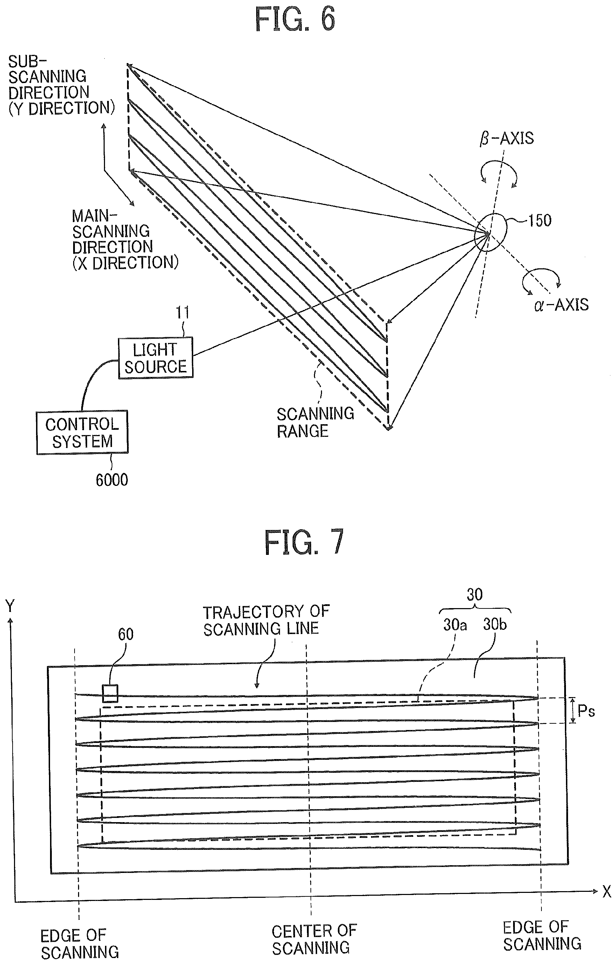

Note also that the FPGA 600 controls the light-emission intensity, the timing of light emission, and the light waveform of each of the light emitting elements 111R, 111G, and 111B in the light source 11 and the LD driver 6111 drives each of the light emitting elements 111R, 111G, and 111B to emit light. As illustrated in FIG. 6, the light beams, which are emitted from each of the light emitting elements 111R, 111G, and 111B and combined to travel along one optical path, is two-dimensionally deflected by the light deflector 15 about the α-axis and the β-axis, and the screen 30 is irradiated with the deflected light beams that have passed through the scanning mirror 20 (see FIG. 1). In this configuration, the deflected light beams serve as a scanning beam. In other words, the screen 30 is two-dimensionally scanned by the scanning beam.

The scanning beam scans (two-way scans) the scanning range of the screen 30 in an oscillating manner in the main scanning direction at a high frequency of about 20,000 to 40,000 hertz (Hz), and scans (one-way scans) the scanning range of the screen 30 in the sub-scanning direction at a low frequency of about a few tens of Hz. In other words, a raster scanning is performed in the present embodiment. In so doing, the light emission of the light emitting elements 111R, 111G, and 111B is controlled according to the scanning position (the position of the scanning beam). Accordingly, an image can be drawn on a pixel-by-pixel basis and a virtual image can be displayed.

As described above, the sub-scanning cycle is about a few tens of Hz. Accordingly, the length of time to draw an image of one frame, i.e., the length of time to scan one frame (one cycle of two-dimensional scanning) is a few tens of millisecond (msec). For example, assuming that the main-scanning cycle and the sub-scanning cycle are 20,000 Hz and 50 Hz, respectively, the length of time to scan one frame is 20 msec.

As illustrated in FIG. 7, the screen 30 includes an image area 30a (i.e., an effective scanning area) and a frame area 30b that surrounds the image area 30a. The image area 30a is irradiated with the light that is modulated according to the image data, and images are drawn on the image area 30a.

In the present embodiment, the entire area to be scanned by the light deflector 15 is referred to as a "scanning range." In the present embodiment, the scanning range includes the image area 30a and a part of the frame area 30b (portion around the periphery of the image area 30a) on the screen 30. In FIG. 7, the trajectory of the scanning line in the scanning range is indicated by a zigzag line. For the sake of explanatory convenience, the number of scanning lines in FIG. 7 is less than the actual number of scanning lines.

The image area 30a of the screen 30 includes a transmissive element such as a microlens array that diffuses light. In the present embodiment, the shape of the image area 30a is rectangular or planar. However, no limitation is intended thereby, and the shape of the image area 30a may be polygonal or curved. Alternatively, in some embodiments, the screen 30 may be a flat plate or curved plate that does not diffuse light. Further, in some embodiments, the image area 30a may be a reflective element such as a micromirror array that diffuses light, depending on the design or layout of the HUD 100.

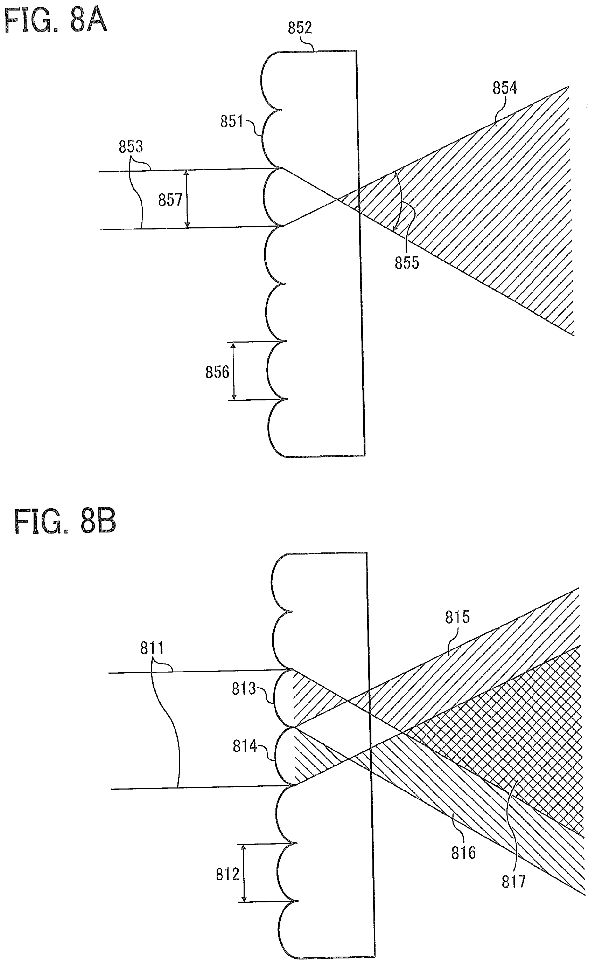

Next, the diffusion and coherent noise that could occur in a microlens array used at the image area of the screen 30 are described with reference to FIG. 8A and FIG. 8B. In FIG. 8A, a microlens array 852 is illustrated. The microlens array 852 has a micro-convex lens arrangement in which a plurality of micro-convex lenses 851 are arranged. A light flux diameter 857 of a pixel displaying beam 853 is smaller than a size 856 of each of the micro-convex lenses 851. In other words, the size 856 of each micro-convex lens 851 is larger than the light flux diameter 857. The pixel displaying beam 853 according to the present embodiment is a bundle of laser beams and has a light intensity distribution as in the Gaussian distribution around the center of the light flux. Accordingly, a light flux diameter 857 is the distance in the radial direction of light flux, where the light intensity in the light intensity distribution is decreased to "1/e2". In FIG. 8A, the light flux diameter 857 is drawn to have a size equal to the size 856 of the micro-convex lens 851. However, no limitation is indicated thereby, and it is not necessary for the light flux diameter 857 to be equal to the size 856 of the micro-convex lens 851. The light flux diameter 857 is satisfactory as long as its size does not exceed the size 856 of the micro-convex lens 851. In FIG. 8A, the pixel displaying beam 853 in its entirety enters a single micro-convex lens 851, and is converted into a diffused light flux 854 having a divergence angle 855. Note that the term "divergence angle" may be referred to as a "diffusion angle" in some cases. In FIG. 8A, no coherent noise occurs as the diffused light flux 854 does not interfere with any other light flux. Note that the size of the divergence angle 855 may be varied by adjusting the shape of the micro-convex lens 851 as desired. In FIG. 8B, the light flux diameter of a pixel displaying beam 811 is two times wider than an array pitch 812 of each micro-convex lens, and the pixel displaying beam 811 is incident upon two micro-convex lenses 813 and 814 in an extended manner. In such a configuration, the pixel displaying beam 811 enters the two micro-convex lenses 813 and 814 and is diffused and divided into dispersed light flux 815 and dispersed light flux 816 by the two micro-convex lenses 813 and 814. The dispersed light flux 815 and the dispersed light flux 816 overlap each other and interfere with each other in an area 817, and thus coherent noise is generated.

As illustrated in FIG. 7, a synchronous detection system 60 including a photoreceptor is disposed at the edges of the image area 30a (a part of the frame area 30b) in the scanning range. In the present embodiment, the synchronous detection system 60 is disposed on the - X and +Y side of the image area 30a. More specifically, the synchronous detection system 60 is disposed at a corner on the +Y side. In the following description, the main scanning direction of the screen 30 is referred to as the X-direction, and the sub-scanning direction of the screen 30 is referred to as the Y-direction.

The synchronous detection system 60 detects the operation of the light deflector 15 and outputs, to the FPGA 600, a synchronizing signal that determines the start timing of scanning or the end timing of scanning.

### information Display>

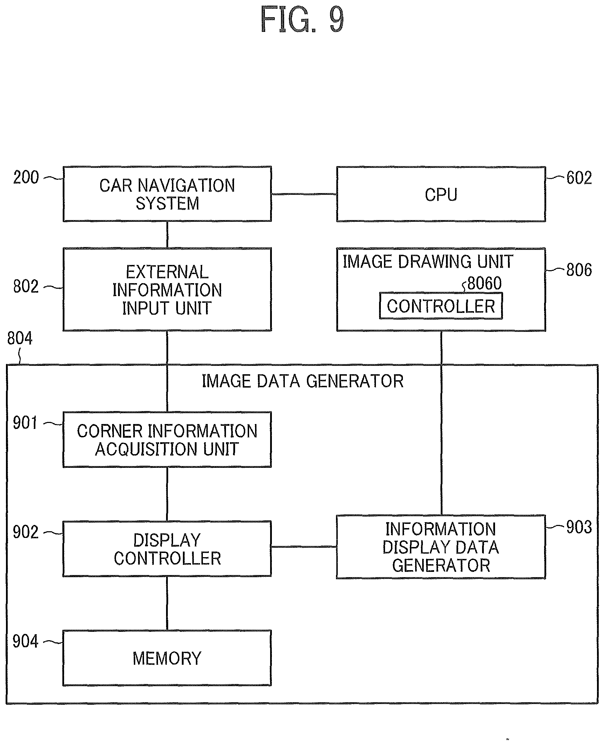

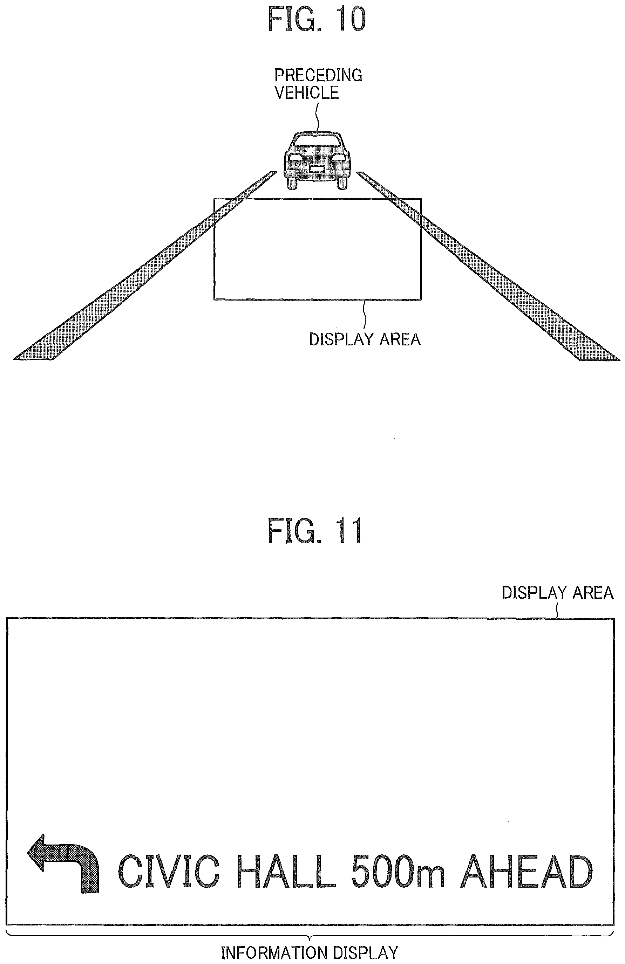

The image data generator 804 of the HUD 100 obtains the information about the next corner (for example, an intersection or a branch point) (for example, information such as the direction of the next corner, the place name, and the remaining distance to the next corner), through the external information input unit 802, from the car navigation system 200 (see FIG. 9) in which the scheduled route along which the vehicle travels (such a route will be referred to simply as "scheduled route" in the following description) is set by a driver or the like. Then, the image data generator 804 of the HUD 100 generates, based on the obtained information, the data of the information display related to the next corner (for example, a display indicating the direction of the next corner, the place name, or the remaining distance to the next corner) (such data may be referred to simply as "information display data" in the following description), and sends the generated data to the image drawing unit 806. The image drawing unit 806 displays the information display as a virtual image in a display area, based on the received information display data (see FIG. 10 and FIG. 11). Note that the term "remaining distance to the next comer" indicates the distance to the next corner on the scheduled route with reference to the current position of the user's vehicle.

As described above, according to the present embodiment, the information display related to the next corner is displayed in the display area overlapping the sight ahead of the user's vehicle (see FIG. 10 and FIG. 11). Accordingly, the driver can recognize the information about the next corner without having to look away from the sight ahead of the vehicle.

FIG. 9 is a block diagram of an example of the configuration of the image data generator 804, according to the present embodiment.

As illustrated in FIG. 9, the image data generator 804 includes a corner information acquisition unit 901, a display controller 902, an information display data generator 903, and a memory 904 (for example, a RAM or a flash memory).

The corner information acquisition unit 901 obtains the information about the next corner on the scheduled route along which the vehicle travels, from the car navigation system 200 through the external information input unit 802, and sends the obtained information to the display controller 902.

The display controller 902 configures the properties and characteristics of the information display, as will be described later in detail, based on the received information about the next corner, and sends the configuration data and the information about the next corner to the information display data generator 903. Moreover, the display controller 902 stores the information about the next corner in the memory 904.

The information display data generator 903 generates information display data based on the received configuration data of the properties and characteristics of information display and the received information about the next corner, and sends the generated information display data to the control unit 8060 of the image drawing unit 806.

The control unit 8060 controls the LD driver 6111 and the MEMS controller 615 based on the information display data received from the information display data generator 903, and displays the information display as a virtual image in a display area.

FIG. 10 is a diagram illustrating the display area overlapping the sight (for example, the road surface) ahead of the user's vehicle, according to the present embodiment.

If such a lot of information as that displayed on car navigation systems is displayed on such a display area within the viewing field of the driver, the driver tends to feel annoyed regardless of the necessity of such information.

In order to handle such a situation, as illustrated in FIG. 11, the information to be displayed in a display area should be carefully selected, and it is desired that minimum information with a high priority such as the information display related to the next corner be displayed.

However, even with a reduced amount of information to be displayed in a display area, if the same information display is continuously displayed in the display area for a long time in the same format (in particular, in an outstanding format), the driver who has already understood and memorized the information tends to feel annoyed.

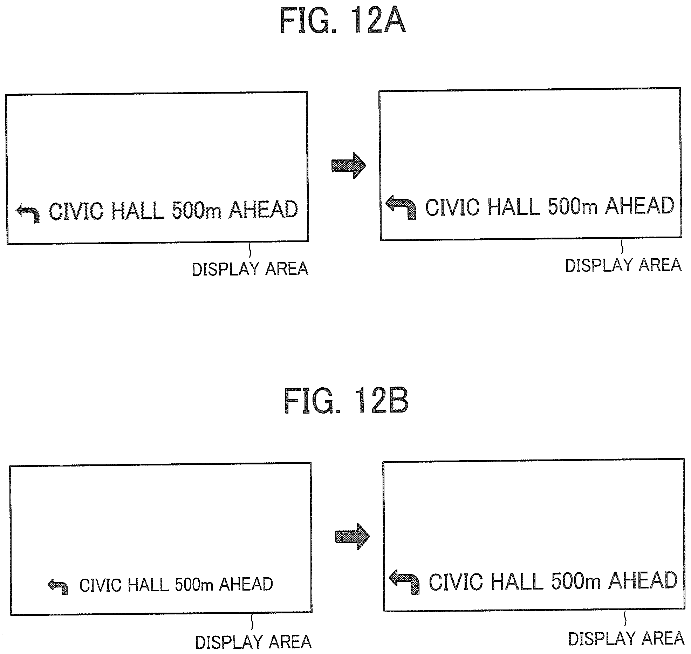

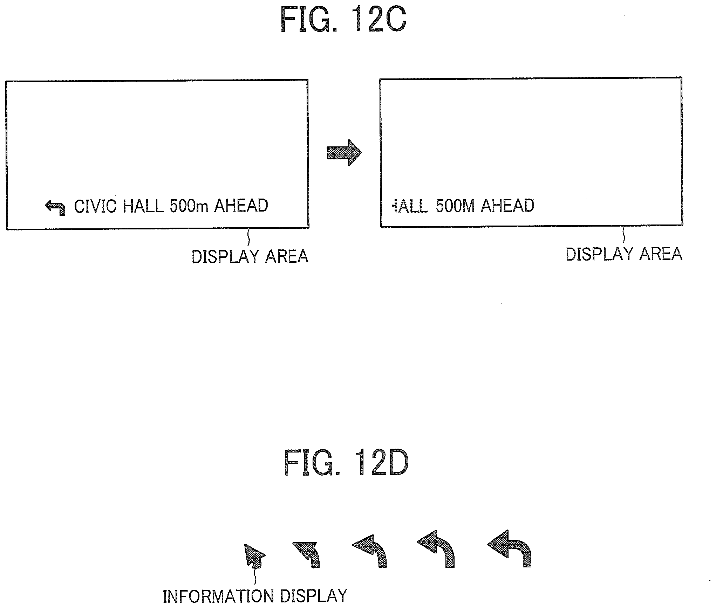

In order to handle such a situation, as illustrated in FIG. 12A, FIG. 12B, FIG. 12C, and FIG. 12D, it is desired that the properties and characteristics of the information display be altered. The term "the properties and characteristics of the information display" indicates the properties and characteristics that have an impact on the visual excitability of information display, and indicates, for example, the brightness of the information display (i.e., the level of lightness and the levels of brightness of the information display), the shape, the color, the size, and the position in the display area.

For example, as illustrated in FIG. 12A, the brightness or color of the information display may be altered. In FIG. 12A, the information display indicating the direction of the next corner (for example, the left), the name of a place (for example, civic hall), and the remaining distance to the next corner (for example, 500 m) are darkly displayed or displayed with pale color (for example, gray) on the left side of FIG. 12A so as to weaken the visual excitability, and are brightly displayed or displayed with dense color (for example, black) on the right side of FIG. 12A so as to strengthen the visual excitability. Note also that the alteration in the color of information display may be accomplished by alterations between such an achromatic color and a chromatic color with stronger visual excitability than the achromatic color, in addition to the alterations in tone with achromatic color (the difference in mixing ratio with black and white).

Alternatively, as illustrated in FIG. 12B for example, the size of the information display may be altered. In FIG. 12B, the information display indicating the direction of the next corner (for example, the left), the name of a place (for example, civic hall), and the remaining distance to the next corner (for example, 500 m) are displayed in a small size on the left side of FIG. 12B so as to weaken the visual excitability, and are displayed in a large size on the right side of FIG. 12B so as to strengthen the visual excitability.

Alternatively, as illustrated in FIG. 12C for example, the position of the information display in the display area may be altered. In FIG. 12C, the information display indicating the direction of the next corner (for example, the left), the name of a place (for example, civic hall), and the remaining distance to the next corner (for example, 500 m) are displayed in its entirety on the left side of FIG. 12C so as to strengthen the visual excitability, and are partially displayed (for example, such that a part of the information display will be slid to the left and go out of the display area) on the right side of FIG. 12C so as to weaken the visual excitability.

Alternatively, as illustrated in FIG. 12D for example, the shape of the information display may be altered. In FIG. 12D, the direction of the corner in the information display indicating the direction of the next corner (for example, the left) is more emphasized on the right side of FIG. 12D than the left side. In other words, the direction of the next corner is gradually emphasized and displayed as the remaining distance to the next corner decreases. Accordingly, a user can easily recognize that the next corner is approaching.

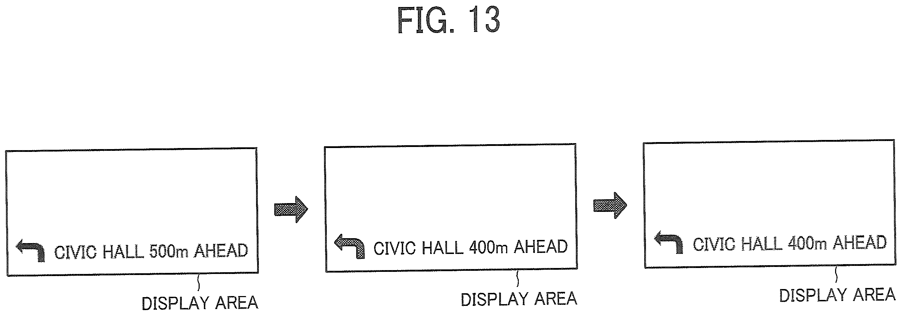

After the information display related to the next corner, where the properties and characteristics are alterable, is displayed as above so as to strengthen the visual excitability on a temporary basis (for example, for a few seconds), the information display may be displayed over time (for example, for tens of seconds to a few hours) so as to weaken the visual excitability until the items (for example, the remaining distance) is updated (see FIG. 13). Accordingly, after a driver is strongly aroused with the items of the information display on a temporary basis, the driver can made aware of that the next corner is approaching, on a continual basis, without annoying or bothering the driver.

In FIG. 13, the information display indicating the direction of the next corner (for example, the left), the name of a place (for example, civic hall), and the remaining distance to the next corner is darkly displayed or displayed with pale color (for example, gray) on the left side of FIG. 13 so as to weaken the visual excitability on a continual basis after the remaining distance was previously updated (for example, after the remaining distance was previously updated to 500 m), and is brightly displayed or displayed with dense color (for example, black) in the center of FIG. 13 so as to strengthen the visual excitability on a temporary basis when the remaining distance is just updated (for example, when the remaining distance is just updated to 400 m). Finally, the information display is darkly displayed or displayed with pale color (for example, gray) on the right side of FIG. 13 so as to weaken the visual excitability on a continual basis after the remaining distance is updated (for example, after the remaining distance is updated to 400 m).

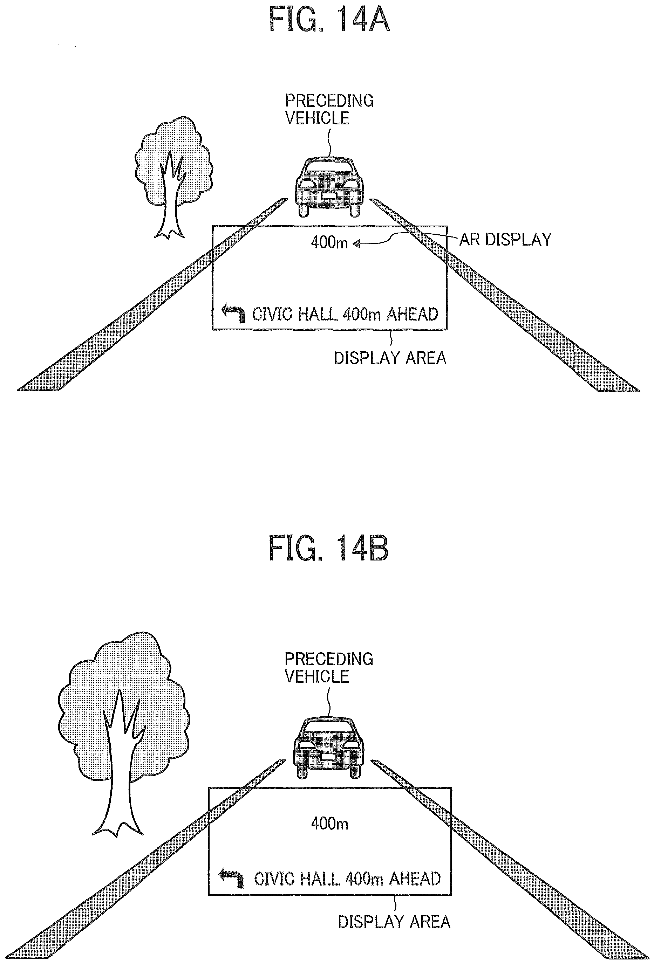

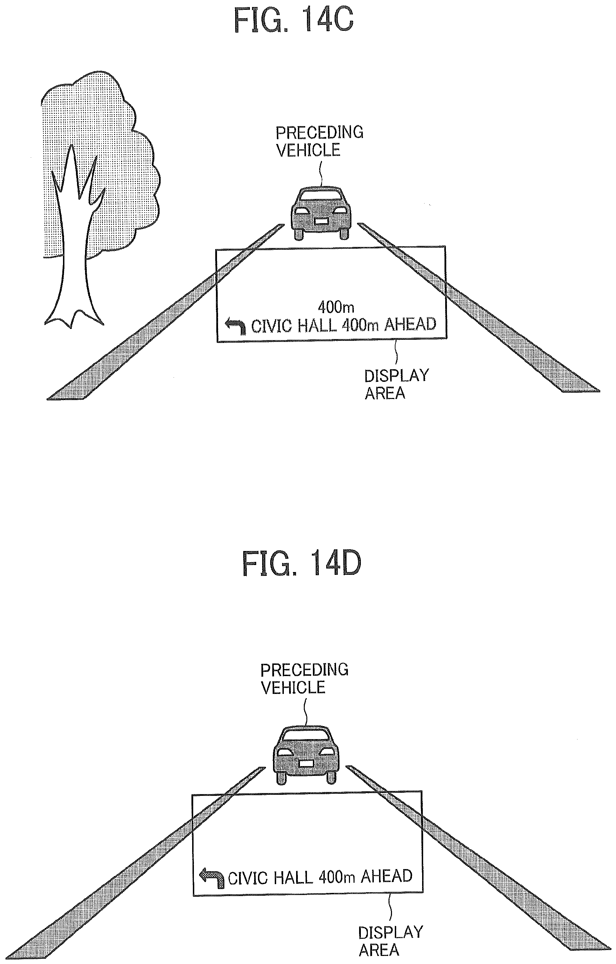

As illustrated in FIG. 14A to FIG. 14D, for example, if an augmented reality (AR) display (i.e., the display of "400 m" in the present embodiment) indicating the update point of the remaining distance to the next corner is displayed at the point on the road surface that corresponds to the remaining distance in an overlapping manner, the update point appears as if it flows from the front side to the rear side in the display area as the vehicle travels forward (see FIG. 14A to FIG. 14C). Accordingly, the driver can easily know that the remaining distance is decreasing.

Then, the information display is normally displayed (so as to weaken the visual excitability) when the above AR display is moving towards the information display in the display area, and the information display is highlighted (displayed so as to strengthen the visual excitability) when the AR display overlaps with the information display. By so doing, the display complies with a series of driving behavior.

### -- Sense that the remaining distance is decreasing -> -- Check the direction of the next corner -> -- Prepare (for example, line changing or deceleration)

Immediately after the information display is highlighted when the AR display overlaps with the information display, the remaining distance may be updated and the information display may normally be displayed. For example, as illustrated in FIG. 14A to FIG. 14D, the information display indicating the remaining distance "400 m" is normally displayed, and immediately after the information display is highlighted when the AR display ("400 m") overlaps with the information display, the remaining distance may be updated to "300 m" and the information display may normally be displayed.

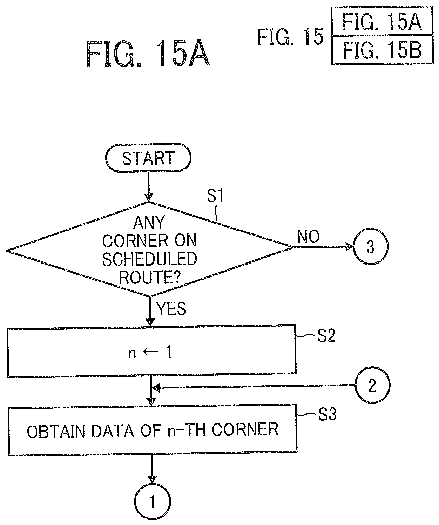

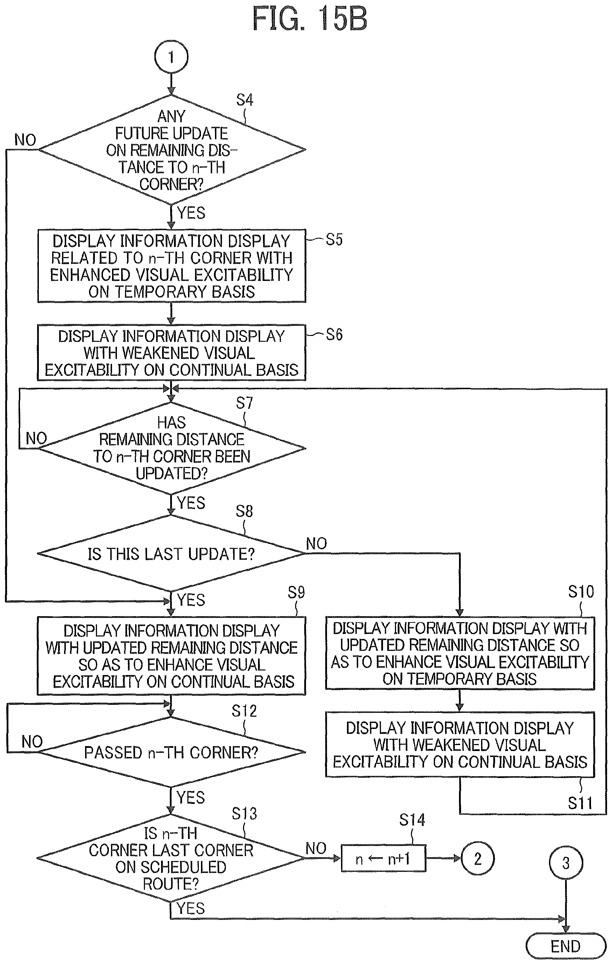

Next, the displaying processes performed by the HUD 100 according to the present embodiment are described with reference to FIG. 15A and FIG. 15B.

FIG. 15A and FIG. 15B are a flowchart of a series of computational algorithms executed by the CPU 602, according to the present embodiment.

Such display processes start when the scheduled route of the user's vehicle is set on the car navigation system 200 by the driver or the like.

In a first step S1, whether or not there is any corner on the scheduled route (for example, an intersection or a branch point) is determined. More specifically, the CPU 602 refers to the scheduled route stored in the car navigation system 200, and determines whether or not there is any corner on the scheduled route at which the user's vehicle should turn. When the result of determination is positive in the step S1, the process shifts to a step S2, and when the result of determination is negative, the flow is terminated.

In the next step S2, "1" is set to "n."

In a next step S3, the information about n-th corner (i.e., the next corner) is obtained. Note that such information about a corner may be referred to simply as "corner information" in the following description. The term "n-th corner" indicates n-th corner among all the corners on the scheduled route, counting from the first corner. More specifically, the corner information acquisition unit 901 obtains the direction of the n-th corner, the place name, and the remaining distance to the n-th corner from the car navigation system 200, as corner information, and sends the obtained corner information to the display controller 902.

In a next step S4, the CPU 602 determines whether there will be any future update on the remaining distance to the n-th corner in the car navigation system 200. When the result of determination is positive in the step S4, the process shifts to a step S5, and when the result of determination is negative, the process shifts to a step S9.

In the step S5, the information display related to the n-th corner is displayed with enhanced visual excitability on a temporary basis. More specifically, the display controller 902 sets the visual excitability of information display to "strong", and sets the display time of the information display to "short time" (for example, a few seconds). Then, the display controller 902 sends the received corner information, the configuration data of the visual excitability, and the configuration data of the display time to the information display data generator 903, and stores the corner information in the memory 904. The information display data generator 903 generates information display data based on the received configuration data of the visual excitability and the received corner information, and sends the generated information display data to the control unit 8060 of the image drawing unit 806. Moreover, the information display data generator 903 transfers the received configuration data of the display time to the control unit 8060 of the image drawing unit 806. The control unit 8060 controls the LD driver 6111 and the MEMS controller 615 based on the received information display data and the received configuration data of the display time, and displays the information display with enhanced visual excitability in the display area on a temporary basis (for example, for a few seconds). In so doing, the control unit 8060 controls the display time of the information display using a built-in timer.

In the next step S6, the information display with weakened visual excitability is displayed on a continual basis. More specifically, the display controller 902 sets the visual excitability of the information display to "weak", and sends the configuration data and the corner information stored in the memory 904 to the information display data generator 903. The information display data generator 903 generates information display data based on the received configuration data of the visual excitability and the received corner information, and sends the generated information display data to the control unit 8060 of the image drawing unit 806. The control unit 8060 controls the LD driver 6111 and the MEMS controller 615 based on the received information display data, and displays the information display with weak visual excitability in the display area on a continual basis.

In the next step S7, the CPU 602 determines whether the remaining distance to the n-th corner has been updated in the car navigation system 200. When the result of determination is positive in the step S7, the process shifts to a step S8. On the other hand, when the result of determination is negative, the same determination is performed again (in other words, the process enters a wait mode). When the remaining distance to the n-th corner is updated, the CPU 602 controls the corner information acquisition unit 901 to obtain the updated information (i.e., the updated remaining distance). The corner information acquisition unit 901 sends the received updated remaining distance to the display controller 902.

In the step S8, the CPU 602 determines whether or not the present update is the last update. When the result of determination is positive in the step S8, the process shifts to the step S9. On the other hand, when the result of determination is negative, the process shifts to a step S10.

In the step S9, the information display with the updated remaining distance is displayed so as to enhance the visual excitability on a continual basis. More specifically, the display controller 902 updates the remaining distance in the corner information in the memory 904 based on the received updated remaining distance, and sets the visual excitability of the information display to "strong." Moreover, the display controller 902 sends the configuration data and remaining-distance updated corner information stored in the memory 904 to the information display data generator 903. The information display data generator 903 generates information display data based on the received configuration data of the visual excitability and the received corner information, and sends the generated information display data to the control unit 8060 of the image drawing unit 806. The control unit 8060 controls the LD driver 6111 and the MEMS controller 615 based on the received information display data, and displays the information display with enhanced visual excitability in the display area on a continual basis. Once the processes in the step S9 are performed, the process shifts to a step S12.

In the step S10, the information display with the updated remaining distance is displayed so as to enhance the visual excitability on a temporary basis. More specifically, the display controller 902 updates the remaining distance in the corner information in the memory 904 based on the received updated remaining distance, and sets the visual excitability of information display to "strong", and sets the display time of the information display to "short time" (for example, a few seconds). Moreover, the display controller 902 sends the configuration data of the visual excitability, the configuration data of the display time, and the configuration data and remaining-distance updated corner information stored in the memory 904 to the information display data generator 903. The information display data generator 903 generates information display data based on the received configuration data of the visual excitability and the received corner information, and sends the generated information display data to the control unit 8060 of the image drawing unit 806. Moreover the information display data generator 903 transfers the received configuration data of the display time to the control unit 8060 of the image drawing unit 806. The control unit 8060 controls the LD driver 6111 and the MEMS controller 615 based on the received information display data, and displays the information display with enhanced visual excitability in the display area on a temporary basis (for example, for a few seconds). In so doing, the control unit 8060 controls the display time of the information display using a built-in timer.

In the next step S11, the information display with weakened visual excitability is displayed on a continual basis. More specifically, the display controller 902 sets the visual excitability of the information display to "weak", and sends the configuration data and the corner information stored in the memory 904 to the information display data generator 903. The information display data generator 903 generates information display data based on the received configuration data of the visual excitability and the received corner information, and sends the generated information display data to the control unit 8060 of the image drawing unit 806. The control unit 8060 controls the LD driver 6111 and the MEMS controller 615 based on the received information display data, and displays the information display with weak visual excitability in the display area on a continual basis.

In the next step S12, the CPU 602 refers to the current position of the user's vehicle provided from the car navigation system 200, and determines whether the user's vehicle has passed through the n-th corner. When the result of determination is positive in the step S12, the process shifts to a step S13. On the other hand, when the result of determination is negative, the same determination is performed again (in other words, the process enters a wait mode).

In the step S13, the CPU 602 refers to the scheduled route set in the car navigation system 200, and determines whether or not the n-th corner is the last corner on the scheduled route. When the result of determination is positive in the step S13, the flow is terminated. On the other hand, when the result of determination is negative, the process shifts to a step S14.

In the step S14, "n" is incremented. When the process in the step S14 is executed, the process returns to the step S3.

In the flowchart depicted in FIG. 15A and FIG. 15B, the information display is displayed so as to enhance the visual excitability after the last update of the remaining distance. However, the information display may be displayed so as to weaken the visual excitability.

The HUD 100 as described above according to the present embodiment is mounted in a vehicle, and includes the corner information acquisition unit (acquisition unit) 901 that obtains the information about the next corner on a scheduled route from the on-vehicle car navigation system 200 (i.e., a device provided with a global positioning system (GPS)) in which the scheduled route along which the vehicle travels is set, and a display system that serves as the image data generator 804 and the image drawing unit 806 to display information including the information display related to the next corner based on the information about the next corner, as a virtual image in a display area. The display system includes the display controller (controller) 902 that can alter the properties and characteristics of the information display. Note also that the term "corner" in the present disclosure indicates a point at which the vehicle should turn on the scheduled route with reference to a path of a straight line (for example, an intersection or a branch point).

Due to such a configuration, the properties and characteristics of the information display can be altered. For example, the information display may be highlighted only when it is desired that the items of the information display be strongly emphasized (the visual excitability of information display is enhanced), and the information display may be normally displayed (the visual excitability may be weakened) in the other cases. Note also that when the information display is normally displayed, it is desired that the information display be displayed with the brightness, color, shape, size, and the position that enable the driver to recognize the information display (or that enable the driver to recognize the items of the information display). Due to such a configuration, the driver can be aware of the information display in advance with not much stress or annoyance, and the drive can quickly appreciate the information when the information display is highlighted. Note that the expression "normally displayed" or "normal display" in the present disclosure indicates weak display in contrast to highlighted display.

As described above, according to the embodiments of the present disclosure, the inconvenience or annoyance that could be caused by information display can be reduced with simple controlling processes, and the driver can still recognize the items of the information display.

It is desired that the display controller 902 alter the properties and characteristics of the information display when the distance (remaining distance) to the next corner with reference to the current position of the user's vehicle is updated in the car navigation system 200.

In such a configuration, the driver can recognize the updated information (i.e., the updated remaining distance) when the remaining distance is updated, i.e., when it is desired that the items of the information display be strongly emphasized.

Concrete examples of the remaining distance when the information display is to be highlighted or normally displayed are given below. Concrete examples of remaining distances in a high-speed traveling situation when the display mode returns to the normal display after the information display is highlighted are given as follows: 2 kilometers (km), 1 km, 500 meters (m), 400 m, 300 m

Moreover, in a high-speed traveling situation, the information display is kept highlighted when the remaining distance is, for example, between 200 m to 0 m. Concrete examples of remaining distances in a normally-traveling situation when the display mode returns to the normal display after the information display is highlighted are given as follows: 400 m, 300 m, 200 m, 100 m

Moreover, in a normally-traveling situation, the information display is kept highlighted when the remaining distance is, for example, between 50 m to 0 m. Note that such concrete examples of remaining distances as above are commonly-used set values in the known car navigation systems, and may be changed or reconfigured on the car navigation system by a user as desired.

In place of the timing at which the remaining distance is updated, the properties and characteristics of the information display may be altered when the estimated length of time required to reach the next corner with reference to the current position of the user's vehicle is updated in the car navigation system 200. Note that such a length of time required to reach the next corner may be referred to simply as "estimated time" in the following description.

The timing at which the properties and characteristics of the information display are altered is not limited to the timing at which the remaining distance or estimated time is updated in the car navigation system 200, and the properties and characteristics of the information display may be altered at any desired timing. For example, the information display may be highlighted at regular time intervals (for example, for every few minutes).

Moreover, at least when the update is not the last update, it is desired that the display controller 902 alter the properties and characteristics of the information display so as to enhance the visual excitability when the timing at which the remaining distance or estimated time is updated, compared with before and after the update.

Moreover, it is desired that the enhancement of the visual excitability of the properties and characteristics of the information display by the display controller 902 become stronger when the remaining distance or estimated time is updated at a later time. Due to such a configuration, the driver can easily recognize that the next corner is approaching.

Moreover, it is desired that the display controller 902 alter the properties and characteristics of the information display so as to more strongly enhance the visual excitability after the last update of the remaining distance or the estimated time, compared with before the last update. Due to such a configuration, the driver can be kept acutely aware that the next corner is approaching very close.

Moreover, it is desired in the car navigation system 200 that the interval between the two contiguous update timings be shorter as the remaining distance or the estimated time gets shorter. Due to such a configuration, as the necessity of making the driver aware of the information about the next corner increases, the driver can be more frequently notified of how far the next corner is.

The information display includes the information about the remaining distance or the estimated time, and it is desired that the display controller 902 update the information about the remaining distance or the estimated time on the information display at the same time as when the properties and characteristics of the information display is altered. Due to such a configuration, the driver can unfailingly recognize that the remaining distance or the estimated time has been updated.

The data including the information display includes moving information that moves towards the information display in the display area as the vehicle travels forward, and it is desired that the display controller 902 alter the properties and characteristics of the information display, assuming the timing at which the moving information overlaps with the information display as the timing at which the remaining distance or the estimated time is to be updated. Due to such a configuration, the driver can easily recognize that the remaining distance or the estimated time is updated.

The HUD 100 may further be provided with a detector that detects in advance a sign arranged on the scheduled route, and it is desired that the display controller 902 alter the properties and characteristics of the information display immediately before the sign becomes visible (for example, the visual excitability is enhanced) based on the result of the detection performed by the detector. In order to detect a sign with the detector in advance, a storage unit in which the position information of each sign is stored in advance (for example, a memory or hard disk (HD)) may be provided, and the position information of the sign that the user's vehicle will soon pass by on the scheduled route may be read from such a storage unit. Alternatively, the position information of the sign that the user's vehicle will soon pass by on the scheduled route may be obtained from the car navigation system 200.

Due to such a configuration, the information about the next corner can strongly be emphasized immediately before the driver sees the sign, and the effect of guidance can be doubled together with the sign. Moreover, a situation in which the driving environment is no longer visually checked on a regular basis (i.e., a situation in which the driver no longer checks signs that exist in reality with his/her eyes), due to too much dependence upon the display of the HUDs, can be avoided.

Note that the expression "immediately before the sign becomes visible" in the present disclosure indicates immediately before a driver with the result of eye test (including unaided vision and corrected eyesight) being, for example, 0.7 to 1.2 (preferably, 1.0) can visually recognize a sign. Note also that the timing at which the properties and characteristics of the information display are altered may be "immediately before the items of a sign can be recognized and understood" in place of "immediately before the sign becomes visible." Also in such a configuration, a driver with the result of eye test being 0.7 to 1.2 (preferably, 1.0) is assumed in a similar manner to the above.

It is desired that the properties and characteristics of the information display include at least one of the brightness, color, shape, size, and the position of the information display.

In the HUD 100 according to the embodiments described above, the properties and characteristics of the information display are altered in a state where the information display is being displayed. However, the information display may be switched between showing and hiding like a HUD according to a modification of the above embodiment as configured below.

The HUD according to a modification of the above embodiment is mounted in a vehicle, and is provided with the corner information acquisition unit (acquisition unit) 901 that obtains the information about the next corner on a scheduled route from the on-vehicle car navigation system 200 (i.e., a device provided with a global positioning system (GPS)) in which the scheduled route along which the vehicle travels is set, and the display system that serves as the image data generator 804 and the image drawing unit 806 to display the information display related to the next corner based on the information about the next corner, as a virtual image. The display system includes a display controller (controller) that can switch between showing and hiding the information display.

Due to such a configuration, the information display can be switched between showing and hiding. For example, the information display may be displayed only when it is desired that the items of the information display be emphasized, and the information display may be hidden in the other cases.

As described above, according to the embodiments of the present disclosure, the inconvenience or annoyance that could be caused by information display can be reduced with simple controlling processes, and the driver can still recognize the items of the information display.

In the HUD according to a modification of the above embodiment, it is desired that the display controller displays the information display when the distance (remaining distance) to the next corner with reference to the current position of the user's vehicle or the estimated length of time (estimated time) required to reach the next corner with reference to the current position of the user's vehicle is updated in the car navigation system 200. Moreover, at least when the update of the remaining distance or the estimated time is not the last update, it is desired that the information display be hidden except when the information is updated.

In such a configuration, the driver can recognize the updated information (i.e., the updated remaining distance) when the remaining distance is updated, i.e., when it is desired that the items of the information display be emphasized.

In the HUD according to a modification of the above embodiment, it is desired that the display controller perform each one of switching from a hidden state to a showing state of the information display and switching from the showing state to the hidden state of the information display at least once until the vehicle reaches the next corner.

In the HUD according to a modification of the above embodiment, it is desired in the car navigation system 200 that the interval between the two contiguous update timings be shorter as the remaining distance or the estimated time gets shorter. Due to such a configuration, as the necessity of making the driver aware of the information about the next corner increases, the driver can be more frequently notified of how far the next corner is.

In the HUD according to a modification of the above embodiment, it is desired that the display controller display the information display on a continual basis after the last update of the remaining distance or the estimated time. Due to such a configuration, the driver can be kept acutely aware that the next corner is approaching very close.

The HUD according to a modification of the above embodiment further includes a detector that detects in advance a sign arranged on the scheduled route, and it is desired that the display controller switch the information display from the hidden state to the showing state immediately before the sign becomes visible (or immediately before the items of the sign can be recognized and understood) based on the result of the detection performed by the detector.

In the HUD according to the above embodiment and a modification of the above embodiment, it is desired that the information display include at least one of the information about the direction of the next corner, the information about the remaining distance to the next corner, and the information about the place name.

In the HUD according to the above embodiment and a modification of the above embodiment, the display system further includes an image-light generator that serves as the image drawing unit 806 to generate image light according to the image data including the input data of the information display (information display data), and a concave mirror 40 (light guiding unit) that guides the generated image light to the front windshield 50 (transmissive reflector).

According to a display system (system) including the car navigation system 200 and the HUD according to the above embodiment or a modification of the above embodiment, a display system can be built that can display guidance information to be displayed with a high priority, within the viewing field of the driver, at a necessary timing, and in a necessary and sufficient format.

According to a vehicle apparatus provided with the HUD according to the above embodiment or a modification of the above embodiment and a vehicle on which the HUD is mounted, the information about the next corner can be provided without annoying or bothering the driver.

According to a vehicle apparatus provided with the display system according to the above embodiment or a modification of the above embodiment and a vehicle on which the display system is mounted, the information about the next corner can be provided without annoying or bothering the driver.

A display method according to the embodiments described above includes a step of obtaining the information about the next corner on a scheduled route from an on-vehicle device provided with a global positioning system (GPS) in which the scheduled route along which the vehicle travels is set, a step of displaying information including the information display related to the next corner, as a virtual image, based on the obtained information display, and a step of altering the properties and characteristics of the information display.

Due to such a configuration, the properties and characteristics of the information display can be altered. For example, the visual excitability of information display is enhanced only when it is desired that the items of the information display be strongly emphasized, and the visual excitability of information display may be weakened in the other cases.

As described above, according to the embodiments of the present disclosure, the inconvenience or annoyance that could be caused by information display can be reduced with simple controlling processes, and the driver can still recognize the items of the information display.

In the display method according to the embodiments as described above, the properties and characteristics of the information display are altered in a state where the information display is being displayed. However, the information display may be switched between showing and hiding like a display method according to a modification of the above embodiment as configured below.

A display method according to a modification of the above embodiment includes a step of obtaining the information about the next corner on a scheduled route from an on-vehicle device provided with a global positioning system (GPS) in which the scheduled route along which the vehicle travels is set, a step of displaying the information display related to the next corner, as a virtual image, based on the obtained information display, and a step of hiding the information display.

Due to such a configuration, the information display can be switched between showing and hiding. For example, the information display may be displayed only when it is desired that the items of the information display be emphasized, and the information display may be hidden in the other cases.

As described above, according to the embodiments of the present disclosure, the inconvenience or annoyance that could be caused by information display can be reduced with simple controlling processes, and the driver can still recognize the items of the information display.

In the above embodiment and a modification of the above embodiment, the information display is displayed based on the navigation information (i.e., the information about the next corner) obtained from the car navigation system 200 that is mounted in the vehicle as a device that obtains the position information of a vehicle. However, the information display may be displayed based on the navigation information obtained from a terminal device provided with a GPS (i.e., a device that obtains the position information of a vehicle) that is carried onto a vehicle, such as a smartphone and a tablet personal computer (PC).

In the above embodiment and a modification of the above embodiment, the "controller" is configured by a display controller. However, the "controller" may include the display controller, and at least one of the corner information acquisition unit 901, the information display data generator 903, the memory 904, and the control unit 8060.

The information display may be the information display related to the next corner when a vehicle is automatically driven.

Due to such a configuration, the information about the next corner can be provided without annoying or bothering the passenger of a vehicle.

In the above embodiment and a modification of the above embodiment, the information display to be displayed in a display area is the information display related to the next corner that the vehicle will turn. However, no limitation is intended thereby, and the information display is satisfactory as long as it is related to the scheduled route along which the vehicle travels. The information display may be related to, for example, a shop, facility, and a house located along or near the scheduled route.

In order to achieve such a configuration, it is desired that the controller (e.g., the FPGA 600) alter the properties and characteristics of the information display or switch the information display between showing and hiding, at the timing when the information about the scheduled route is input from a device (for example, the car navigation system 200) that obtains the position information of a vehicle, in which the scheduled route along which the vehicle travels is set.

Alternatively, the controller (e.g., the FPGA 600) may alter the properties and characteristics of the information display, or switch the information display between showing and hiding at predetermined timings (for example, on a regular basis, or at a plurality of timings where the time intervals among the timings regularly change (for example, the time intervals among the timings get shorter or longer in stages)).

In the HUD according to the above embodiment and a modification of the above embodiment, the optical system includes the concave mirror 40. However, no limitation is intended thereby. For example, the optical system may include a convex mirror, or may include a curved mirror (a concave mirror or a convex mirror) and a mirror arranged between the curved mirror and the screen 30.

In the above embodiment and a modification of the above embodiment, the optical scanner includes the scanning mirror 20, but may have no scanning mirror.

In the above embodiment and a modification of the above embodiment, laser diodes (LDs) such as end-surface emitting lasers are used as the light source. However, different type of lasers such as surface-emitting lasers may be used.

In the above embodiment and a modification of the above embodiment, the HUD is configured to be compatible with color images. However, the HUD may be configured to be compatible with monochrome images.

The transmissive reflector is not limited to a front windshield of the vehicle, but may be, for example, a side windshield or a rear windshield. In other words, the transmissive reflector is satisfactory as long as it is a windshield provided for the vehicle for a driver or passenger who visually recognizes a virtual image to view the outside of the vehicle.

In the above embodiment and a modification of the above embodiment, a HUD that is mounted in a car was described as an example. However, no limitation is indicated thereby, and variations may be made as long as the HUD is provided for a vehicle that travels on a road surface. For example, the vehicle that is used as a vehicle apparatus according to the embodiment of the present disclosure is not limited to a four-wheel car, and may be a motorcycle or an auto tricycle. In such cases, a windshield or a combiner is to be provided as a transmissive reflector. The power supply of a vehicle may be, for example, an engine, a motor, or a combination of an engine and a motor.

Note also that the concrete numerical values or shapes in the above embodiment and a modification of the above embodiment are given as an example and may be modified as desired without departing from the spirit or scope of the present disclosure.

Next, how the above embodiment of the present disclosure and the modification of the above embodiment are conceived are described.

Conventionally, technologies in an on-vehicle HUD to obtain for display the navigation information (e.g., the remaining distance to the next intersection or branch point or the turning direction of the next intersection or branch point) from the navigation system are known in the art.

However, in the conventional HUDs that display the navigation information, in order to ensure the readability of information, it was necessary to increase the display area or increase the difference in color and lightness of information with the background. For this reason, if "known information" is displayed, such display is only annoying for the driver. There is room for improvement in this point.

In order to deal with such a situation, JP-2005-241516-A discloses a configuration in which the display is switched according to the position information of the user's vehicle for the purpose of displaying information without annoying or bothering the driver.

However, the control becomes complicated in the disclosure of JP-2005-241516-A. There is room for improvement in this respect.

Some features in the above embodiment and a modification of the above embodiment are listed as follows.
-- The navigation information (e.g., the remaining distance to the next intersection or the turning direction of the next intersection) is obtained from a navigation system and displayed.
-- The navigation information is displayed with a color/lightness or size that does not make the driver feel annoyed (normal display), and the navigation information is highlighted at a desired timing.
-- In the normal display, the navigation information is displayed with brightness that makes the display of the navigation information distinguishable with reference to the brightness of the background and that does not make the driver feel dazzling. Accordingly, the driver does not feel annoyed.
-- In the highlighted display, at least one of the color, lightness, shape, size, and the position of the navigation information is changed, and the changes in the highlighted display has a unique feature over the background. Due to such a unique visual feature, a popout phenomenon is caused and the driver perceives a target stimulus subconsciously.
-- As a guidance point (e.g., the next intersection to be turned at) is approaching, the frequency of highlighted display is increased. Accordingly, the display of information can be minimized in keeping with the driving situation.
-- The importance of the navigation display increases for the driver as the remaining distance gets shorter.

For this reason, the navigation display is highlighted in synchronization with the update of the remaining distance. Accordingly, the navigation display is displayed in accordance with its importance.
-- The point at which the remaining distance is updated (the position on the road surface in reality where the remaining distance to the guidance point is certain number of kilometers) is displayed as an augmented reality (AR) display. Due to this configuration, the update point appears as if it flows from the front side to the rear side in the display area as the car body moves forward, and the driver can easily know that the remaining distance is decreasing. Moreover, when the AR display overlaps with the display of remaining distance in the display area, the remaining distance is updated and the navigation display is highlighted. Due to this configuration, the display complies with a series of driving behavior as follows.

### -- Sense that the remaining distance is decreasing -> -- Check the behavior to be taken at the next intersection -> -- Prepare (for example, line changing)

In the information display device according to the embodiment as described above, the controller switches between showing and hiding the information display at a timing when information about the route is input from a device in which the route is set and position information of the vehicle is obtained.

In the information display device according to the embodiment as described above, the display controller displays the information display on a continual basis after the last update.

The information display device according to the embodiment as described above includes a detector configured to detect in advance a sign arranged on the route, where the controller switches from hiding the information display to displaying the information display immediately before the sign becomes visible based on a result of detection performed by the detector.

## Claims

1. An information display device (100) that displays information including information display related to a route along which a vehicle is to travel as a virtual image in a display area, the display device (100) comprising
a controller (600, 902) configured to alter properties and characteristics of the information display being displayed in the display area, wherein
the controller (600, 902) alters the properties and characteristics of the information display at a timing determined in advance, and
the controller (600, 902) alters the properties and characteristics of the information display at a timing when information about the route is input from a device (200) in which the route is set and position information of the vehicle is obtained,
wherein the controller (600, 902) alters the properties and characteristics of the information display at an at least one update when distance to a next point at which the vehicle should turn on the scheduled route with reference to a path of a straight line with reference to a position of the vehicle on the route or an estimated length of time required to reach the next point at which the vehicle should turn on the scheduled route with reference to a path of a straight line with reference to the position of the vehicle is updated in the device (200), and
wherein at least when the at least one update is not a last update, the controller (600, 902) alters the properties and characteristics of the information display to enhance visual excitability at the at least one update, compared with before and after the at least one update, the information display device is **characterised in that**
after the information display indicating the direction of a next point at which the vehicle should turn on the scheduled route with reference to a path of a straight line, the name of a place or the remaining distance to a next point at which the vehicle should turn on the scheduled route with reference to a path of a straight line, is displayed so as to strengthen the visual excitability on a temporary basis at the at least one update, the information display is displayed so as to weaken the visual excitability on a continual basis after the at least one update.

2. The information display device (100) according to claim 1, wherein the controller (600, 902) alters the properties and characteristics of the information display to enhance visual excitability more strongly at the at least one update at a later time.

3. The information display device (100) according to any one of claim 2, wherein the at least one update comprises a plurality of updates, and in the device (200), an interval between two contiguous ones of the plurality of updates is made shorter as the distance or the time gets shorter.

4. The information display device (100) according to any one of claims 2 to 3, wherein the controller (600, 902) alters the properties and characteristics of the information display to enhance visual excitability more strongly after the at least one update is a last update.

5. The information display device (100) according to any one of claims 2 to 4, wherein the information display includes information about the distance or the time, and the controller (600, 902) updates the information about the distance or the time on the information display at a same time as when the properties and characteristics of the information display is altered.

6. The information display device (100) according to any one of claims 1 to 5, wherein
the information including the information display includes moving information that moves towards the information display in the display area as the vehicle travels forward, and
the controller (600, 902) alters the properties and characteristics of the information display when the moving information overlaps with the information display.

7. The information display device (100) according to any one of claims 1 to 6, further including a detector that detects in advance a sign arranged on the route, wherein the controller (600, 902) alters the properties and characteristics of the information display immediately before the sign becomes visible based on a result of detection performed by the detector.

8. The information display device (100) according to any one of claims 1 to 7, wherein the properties and characteristics of the information display include at least one of brightness, color, shape, size, and position of the information display.

9. The information display device (100) according to any of claim 1 to 8, wherein the point at which the vehicle should turn on the scheduled route with reference to a path of a straight line is a corner.

10. A vehicle apparatus comprising:
the information display device (100) according to any one of claims 1 to 9; and
a vehicle on which the information display device (100) is mounted.

## Patentansprüche

1. Informationsanzeigeeinrichtung (100), die Informationen wiedergibt, die eine Informationsanzeige enthält, die sich auf eine Route bezieht, entlang welcher ein Fahrzeug als ein virtuelles Bild in einem Wiedergabebereich reist, wobei die Wiedergabeeinrichtung (100) aufweist
eine Steuerung (600, 902), die konfiguriert ist, um Eigenschaften und Charakteristiken von der Informationswiedergabe zu ändern, die in dem Wiedergabebereich angezeigt werden, wobei
die Steuerung (600, 902) die Eigenschaften und Charakteristiken von der Informationswiedergabe mit einer zeitlichen Steuerung ändert, die im Voraus bestimmt wird, und
die Steuerung (600, 902) ändert die Eigenschaften und Charakteristiken der Informationswiedergabe mit einer zeitlichen Steuerung, wenn Informationen über die Route von einer Einrichtung (200) eingegeben werden, in welcher die Route eingestellt ist und Positionsinformationen von dem Fahrzeug erhalten werden,
wobei die Steuerung (600, 902) die Eigenschaften und Charakteristiken von der Informationswiedergabe bei zumindest einer Aktualisierung ändert, wenn ein Abstand zu einem nächsten Punkt, an welchem das Fahrzeug auf der geplanten Route mit Bezug auf einen Weg einer geraden Linie mit Bezug zu einer Position von dem Fahrzeug auf der Route oder einer abgeschätzten Zeitdauer, die erforderlich ist, um den nächsten Punkt zu erreichen, bei welchem das Fahrzeug auf der geplanten Route mit Bezug zu einem Weg einer geraden Linie mit Bezug auf die Position von dem Fahrzeug in der Einrichtung (200) aktualisiert wird, und
wobei zumindest, wenn die zumindest eine Aktualisierung nicht eine letzte Aktualisierung ist, die Steuerung (600, 902) die Eigenschaften und Charakteristiken von der Informationswiedergabe ändert, um die sichtbare Erregbarkeit bei der zumindest einen Aktualisierung zu verstärken, verglichen mit vor und nach der zumindest einen Aktualisierung, wobei
die Informationswiedergabeeinrichtung **gekennzeichnet ist dadurch**, dass
nachdem die Informationswiedergabe, die die Richtung von einem nächsten Punkt anzeigt, bei welchem das Fahrzeug auf der geplanten Route mit Bezug zu einem Weg einer geraden Linie wenden sollte, der Name von einem Platz oder der verbleibenden Entfernung zu einem nächsten Punkt, bei welchem das Fahrzeug auf der geplanten Route mit Bezug zu einem Weg einer geraden Linie wenden sollte, wiedergegeben wird, um so die visuelle Erregbarkeit auf einer temporären Basis bei der zumindest einen Aktualisierung zu verstärken, wobei die Informationswiedergabe so wiedergegeben wird, um die visuelle Erregbarkeit auf einer kontinuierlichen Basis nach der zumindest einen Aktualisierung zu schwächen.

2. Informationswiedergabeeinrichtung (100) gemäß Anspruch 1, wobei die Steuerung (600, 902) die Eigenschaften und Charakteristiken der Informationswiedergabe ändert, um die visuelle Erregbarkeit stärker bei der zumindest einen Aktualisierung zu einer späteren Zeit zu verstärken.

3. Informationswiedergabeeinrichtung (100) gemäß Anspruch 2, wobei die zumindest eine Aktualisierung mehrere Aktualisierungen aufweist, und in der Einrichtung (200) ein Intervall zwischen zwei aufeinanderfolgenden der mehreren der Aktualisierungen kürzer gemacht wird als die Entfernung oder die Zeit kürzer wird.

4. Informationswiedergabeeinrichtung (100) gemäß irgendeinem der Ansprüche 2 bis 3, wobei die Steuerung (600, 902) die Eigenschaften und Charakteristiken der Informationswiedergabe ändert, um die visuelle Erregbarkeit noch stärker nach der zumindest einen Aktualisierung, die eine letzte Aktualisierung ist, zu verstärken.

5. Informationswiedergabeeinrichtung (100) gemäß irgendeinem der Ansprüche 2 bis 4, wobei die Informationswiedergabe Informationen über den Abstand oder die Zeit enthält, und die Steuerung (600, 902) aktualisiert die Informationen über die Entfernung oder die Zeit auf der Informationswiedergabe zu einer gleichen Zeit als wenn die Eigenschaften Charakteristiken von der Informationswiedergabe geändert werden.

6. Informationswiedergabeeinrichtung (100) gemäß irgendeinem der Ansprüche 1 bis 5, wobei
die Informationen, die die Informationswiedergabe enthalten, Bewegungsinformationen enthalten, die sich zu der Informationswiedergabe in dem Wiedergabebereich bewegen wenn das Fahrzeug vorwärts reist, und
die Steuerung (600, 902) ändert die Eigenschaften und Charakteristiken von der Informationswiedergabe, wenn die Bewegungsinformationen mit der Informationswiedergabe überlappen.

7. Informationswiedergabeeinrichtung (100) gemäß irgendeinem der Ansprüche 1 bis 6, die ferner einen Detektor enthält, der im Voraus ein Zeichen erfasst, das auf der Route angeordnet ist, wobei die Steuerung (600, 902) die Eigenschaften und Charakteristiken von der Informationswiedergabe sofort ändert, bevor das Zeichen sichtbar wird, basierend auf einem Ergebnis der Erfassung, die durch den Detektor durchgeführt wird.

8. Informationswiedergabeeinrichtung (100) gemäß irgendeinem der Ansprüche 1 bis 7, wobei die Eigenschaften und Charakteristiken der Informationswiedergabe zumindest eines enthalten von Helligkeit, Farbe, Form, Größe und Position von der Informationswiedergabe.

9. Informationswiedergabeeinrichtung (100) gemäß irgendeinem der Ansprüche 1 bis 8, wobei der Punkt, an welchem das Fahrzeug auf der geplanten Route unter Bezug auf einen Weg von einer geraden Linie wenden sollte, eine Ecke ist.

10. Fahrzeugvorrichtung, die aufweist:
eine Informationswiedergabeeinrichtung (100) gemäß irgendeinem der Ansprüche 1 bis 9; und
ein Fahrzeug, auf welchem die Informationswiedergabeeinrichtung (100) montiert ist.

## Revendications

1. Dispositif d'affichage d'informations (100) qui affiche des informations comprenant un affichage d'informations relatif à un itinéraire le long duquel un véhicule doit se déplacer sous la forme d'une image virtuelle dans une zone d'affichage, le dispositif d'affichage (100) comprenant
un contrôleur (600, 902) configuré pour modifier des propriétés et caractéristiques de l'affichage d'informations affiché dans la zone d'affichage, dans lequel le contrôleur (600, 902) modifie les propriétés et les caractéristiques de l'affichage d'informations à un instant déterminé à l'avance, et
le contrôleur (600, 902) modifie les propriétés et caractéristiques de l'affichage d'informations à un instant où des informations sur l'itinéraire sont entrées à partir d'un dispositif (200) dans lequel l'itinéraire est défini et des informations de position du véhicule sont obtenues,
dans lequel le contrôleur (600, 902) modifie les propriétés et les caractéristiques de l'affichage d'informations lors d'au moins une mise à jour lorsque la distance jusqu'à un point suivant auquel le véhicule doit tourner sur l'itinéraire programmé en référence à une trajectoire d'une ligne droite en référence à une position du véhicule sur l'itinéraire ou une estimation du temps nécessaire pour atteindre le point suivant auquel le véhicule doit tourner sur l'itinéraire prévu en référence à une trajectoire d'une ligne droite en référence à la position du véhicule est mise à jour dans le dispositif (200), et
dans lequel au moins lorsque l'au moins une mise à jour n'est pas une dernière mise à jour, le contrôleur (600, 902) modifie les propriétés et les caractéristiques de l'affichage d'informations pour améliorer l'excitabilité visuelle lors de l'au moins une mise à jour, par rapport à avant et après l'au moins une mise à jour,
le dispositif d'affichage d'informations est **caractérisé**
**en ce qu'**après l'affichage d'informations indiquant la direction d'un point suivant auquel le véhicule doit tourner sur l'itinéraire programmé en référence à une trajectoire d'une ligne droite, le nom d'un lieu ou la distance restante jusqu'à un point suivant auquel le véhicule doit tourner sur l'itinéraire prévu en référence à une trajectoire d'une ligne droite, est affiché de manière à renforcer l'excitabilité visuelle de manière temporaire lors de l'au moins une mise à jour, l'affichage d'informations est affiché de manière à affaiblir l'excitabilité visuelle de manière continue après l'au moins une mise à jour.

2. Dispositif d'affichage d'informations (100) selon la revendication 1, dans lequel le contrôleur (600, 902) modifie les propriétés et les caractéristiques de l'affichage d'informations pour améliorer plus fortement l'excitabilité visuelle lors de l'au moins une mise à jour à un instant ultérieur.

3. Dispositif d'affichage d'informations (100) selon la revendication 2, dans lequel l'au moins une mise à jour comprend une pluralité de mises à jour, et dans le dispositif (200), un intervalle entre deux mises à jour contiguës de la pluralité de mises à jour est rendu plus court lorsque la distance ou le temps devient plus court.

4. Dispositif d'affichage d'informations (100) selon l'une quelconque des revendications 2 à 3, dans lequel le contrôleur (600, 902) modifie les propriétés et les caractéristiques de l'affichage d'informations pour améliorer plus fortement l'excitabilité visuelle après que l'au moins une mise à jour est une dernière mise à jour.

5. Dispositif d'affichage d'informations (100) selon l'une quelconque des revendications 2 à 4, dans lequel l'affichage d'informations comprend des informations sur la distance ou le temps, et le contrôleur (600, 902) met à jour les informations sur la distance ou le temps sur l'affichage d'informations en même temps que lorsque les propriétés et les caractéristiques de l'affichage d'informations sont modifiées.

6. Dispositif d'affichage d'informations (100) selon l'une quelconque des revendications 1 à 5, dans lequel
les informations comprenant l'affichage d'informations comprennent des informations en mouvement qui se déplacent vers l'affichage d'informations dans la zone d'affichage lorsque le véhicule se déplace vers l'avant, et
le contrôleur (600, 902) modifie les propriétés et les caractéristiques de l'affichage d'informations lorsque les informations en mouvement chevauchent l'affichage d'informations.

7. Dispositif d'affichage d'informations (100) selon l'une quelconque des revendications 1 à 6, comprenant en outre un détecteur qui détecte à l'avance un panneau agencé sur l'itinéraire, dans lequel le contrôleur (600, 902) modifie immédiatement les propriétés et les caractéristiques de l'affichage d'informations avant que le panneau ne devienne visible sur la base d'un résultat de détection effectué par le détecteur.

8. Dispositif d'affichage d'informations (100) selon l'une quelconque des revendications 1 à 7, dans lequel les propriétés et caractéristiques de l'affichage d'informations comprennent au moins l'une parmi la luminosité, la couleur, la forme, la taille et la position de l'affichage d'informations.

9. Dispositif d'affichage d'informations (100) selon l'une quelconque des revendications 1 à 8, dans lequel le point auquel le véhicule doit tourner sur l'itinéraire programmé en référence à une trajectoire d'une ligne droite est un coin.

10. Appareil de véhicule comprenant :
le dispositif d'affichage d'informations (100) selon l'une quelconque des revendications 1 à 9 ; et
un véhicule sur lequel le dispositif d'affichage d'informations (100) est monté.
